# EUROPEAN PATENT APPLICATION

(11) **EP 3 065 041 A1**
(43) Date of publication of application: **07.09.2016**
(21) Application number: 16158332.3
(22) Date of filing: 02.03.2016
(51) Int. Cl.: G06F 3/0484, G06F 17/30, G06F 3/0481

(54) **3D OBJECT MODELING METHOD AND STORAGE MEDIUM HAVING COMPUTER PROGRAM STORED THEREON USING THE SAME**

(30) Priority: 05.03.2015 KR 20150031161
(71) Applicant: Han, Chang Yub, Namyangju-si 12158 (KR)
(72) Inventor: Han, Chang Yub, Namyangju-si 12158 (KR)
(74) Representative: Zardi, Marco

(57) **Abstract**

A 3D object modeling method is disclosed herein. The method includes a first step of selecting an image of an object corresponding to the type of user terminal from images of the object and then disposing the selected image of the object, and a second step of three-dimensionally modeling the image of the object according to the type of event. The first step includes a first process of photographing the image of the object, setting the sizes of the photographed image to first reference sizes, and registering the images in a modeling server, a second process of connecting with the modeling server, and selecting the type and resolution of the user terminal, a third process of setting the sizes of the set first reference sizes as second reference sizes, and a fourth process of selecting and disposing an image corresponding to one of the set second reference sizes.

## Description

### BACKGROUND

### 1. Technical Field

At least one embodiment of the present invention relates to a three-dimensional (3D) object modeling method that can efficiently model a 3D object according to the type of user terminal during the processing of 3D data, and a storage medium having a computer program stored thereon using the same.

### 2. Description of the Related Art

Conventional GUI (Graphic User Interface) input devices are implemented in the form of a mouse, a track ball device, a touchpad and a point stick, and chiefly operate according to a method of controlling a pointer (a cursor) on a monitor. These devices process an object on a screen using a selection and clicking method via a pointer (a cursor).

However, application programs, such as a Computer-Aided Design (CAD) system and a 3D animation authoring tool, which additionally require the function of enabling an element on a screen to be subjected to linear movement across lateral and vertical planes and rotational conversion using a conventional method, have a limitation in that a conversion purpose can be achieved only through the various inconvenient steps of clicking the right button of a mouse, selecting rotation and then performing dragging.

This limitation is a natural result that occurs because conventional input devices are designed to be two dimension (2D)-centric, and the conventional input devices have been used without significant inconvenience in a conventional environment in which 2D-centric tasks, such as the editing of text or an image, is performed. However, the recent rapid development of computer systems and the continuous popularization of high-speed networks enable the more dynamic and visual processing of data.

In general-purpose environments such as Internet web pages, the role of 3D data has been gradually increasing. Users tend to prefer 3D images. Thus, the demand for the processing of 3D data is rapidly increasing, and the continuous development and popularization of technology for processing 3D data are required.

Accordingly, an input method that is basically used to control an object on a screen requires 3D input control, not conventional 2D input control. Meanwhile, the environment in which a user communicates with a 3D object in a system is two-dimensional, and thus it is necessary to laterally and vertically rotate and view an object model on a screen in order to process and edit 3D data in the 2D environment. Therefore, there is an increasing need for an effective 3D conversion input device.

### [Preceding technical documents]

### [Patent documents]

Patent document 1: Korean Patent No. 10-0635778 entitled "Object Modeling Method using 3D Rotation Conversion Input Device"
Patent document 2: Korean Patent Application Publication No. 10-2009-0111373 entitled "3D Image Generation and Display Method and Device thereof"

### SUMMARY

At least one embodiment of the present invention is directed to the provision of a 3D object modeling method that suppresses the generation of traffic by reducing the computational load of a user terminal according to the type of user terminal during the processing of 3D data, thereby efficiently modeling a 3D object, and a storage medium having a computer program stored thereon using the same.

A 3D object modeling method according to at least one embodiment of the present invention is a method for three-dimensionally modeling an image of an object via a user terminal connected with a modeling server. The method includes: a first step of selecting an image of an object corresponding to the type of user terminal from images of the object whose sizes are set to one or more types of sizes, and then disposing the selected image of the object, via the user terminal; and a second step of three-dimensionally modeling the image of the object according to the type of event that is input by a user.

The first step includes: a first process of photographing the image of the object using a photographing means, setting the sizes of the photographed image to first reference sizes, and registering the images in a modeling server; a second process of connecting, by the user, with the modeling server, and selecting the type and resolution of the user terminal; a third process of setting the sizes of the set first reference sizes as second reference sizes for the image that the user desires to three-dimensionally model according to the selected type and resolution of the user terminal; and a fourth process of selecting and disposing an image corresponding to one of the set second reference sizes.

The fourth process includes first selecting a first image of the images whose sizes are set to the second reference sizes in the third process, and then disposing the selected first image.

The method may further include a third step of, when the event is not input by the user, selecting a remaining image, other than the first image, from the images whose sizes are set to the second reference sizes in the third process, and then disposing the selected image.

The second step may include: a first process of, when the event corresponds to enlargement or reduction, calculating the size of an image of the object required due to the enlargement or reduction; and a second process of, when the calculated size of the image of the object is smaller than the second reference sizes, selecting an image of one of the second reference sizes.

The second process may include, when the calculated size of the image of the object is larger than the second reference sizes, selecting an image of the biggest one of the first reference sizes.

The second step may include: a process of, when the event corresponds to rotation, rotating the image of the object selected and disposed in the fourth process; and a process of, when the event corresponds to movement, moving the image of the object, selected and disposed in the fourth process, by changing only the location of the image of the object.

The first reference sizes may include a small image size, a medium image size, and a big image size, and the second reference sizes may include the small and medium image sizes of the first reference sizes.

The event may include any one of enlargement, reduction, rotation and movement events that are generated by at least one of the touch, mouse and scroll inputs of the user on the display of the user terminal.

### BRIEF DESCRIPTION OF THE DRAWINGS

The above and other objects, features and advantages of the present invention will be more clearly understood from the following detailed description taken in conjunction with the accompanying drawings, in which:
FIG. 1 is a block diagram showing a 3D object modeling system that implements a 3D object modeling method according to an embodiment of the present invention;
FIG. 2 is a block diagram schematically showing the modeling server of FIG. 1;
FIG. 3 is a flowchart showing a 3D object modeling method according to an embodiment of the present invention;
FIGS. 4A to 4D are diagrams showing an event of enlarging an object using the 3D object modeling method of FIG. 3;
FIGS. 5A to 5D are diagrams showing an event of rotating an object using the 3D object modeling method of FIG. 3; and
FIGS. 6A to 6D are diagrams showing an event of moving an object using the 3D object modeling method of FIG. 3.

### DETAILED DESCRIPTION

The terms used herein will be described in brief, and then the present invention will be described in detail.

Although general terms that have been currently widely used will be selected based on the functions used herein as the terms used herein as much as possible, the meanings thereof may vary according to the intention of those skilled in the art, a precedent, or the advent of a new technology. Furthermore, in a particular case, a term selected by the applicant as desired may be used, in which case the meaning thereof will be described in detail in the corresponding portion of the following detailed description. Accordingly, the terms used herein should be defined based on the meanings of the terms and the overall context of the present specification, not simply based on the names of the terms.

Throughout the specification and the claims, unless explicitly described to the contrary, the terms "include" and "comprise" and their variants, such as "includes," "including," "comprises" and "comprising," will be understood to imply the inclusion of stated components, not the exclusion of any other components. Furthermore, the term "... unit" or "... module" described herein refers to a unit for processing at least one function or operation, and may be implemented as hardware, software, or a combination of hardware and software.

In the following description, embodiments of the present invention will be described in detail with reference to the accompanying drawings so that those having ordinary knowledge in the technical field to which the present invention pertains can easily practice the present invention. However, the present invention may be implemented in various different forms, and are not limited only to the embodiments described herein. Furthermore, portions unrelated to the present invention are omitted in the accompanying drawings in order to clearly describe the present invention, and similar reference symbols will be assigned to similar components throughout the specification.

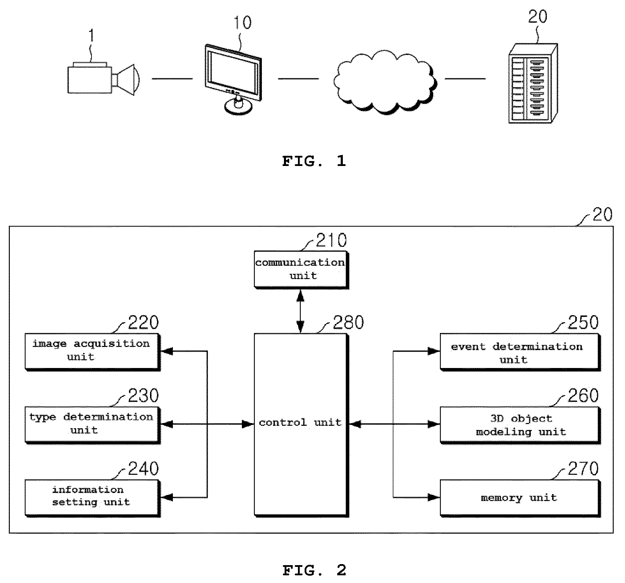

FIG. 1 is a block diagram showing a 3D object modeling system for implementing a 3D object modeling method according to an embodiment of the present invention, and FIG. 2 is a block diagram schematically showing the modeling server of FIG. 1.

Referring to FIG. 1, the 3D object modeling system for implementing a 3D object modeling method according to the present embodiment is a system that efficiently models a 3D object during the processing of 3D data according to the type of user terminal 10, and includes a camera device 1, a user terminal 10, and a modeling server 20.

The camera device 1 is a device by which a user photographs an image of a desired object, and may include a color camera or a depth camera.

The user terminal 10 acquires the image of the object photographed by the camera device 1, and may connect with the modeling server 20 and set the sizes of the acquired image of the object to one or more types. For example, the one or more types may include S (small), M (medium), and B (big) types to indicate that the size of the object image is small, medium and big, respectively. However, in the present invention, the types of sizes of the acquired image are not limited, but may be set to various different sizes according to the object or the surround situation of the object. The user terminal 20 is a device that can run a data transmission and 3D modeling program that implements the above-described operations, and may include not only computing devices, such as a personal computer (PC) and a notebook computer, but also wireless terminals, such as a high-performance smartphone, an IPad, a Personal Digital Assistant (PDA), a Hand Personal Computer (HPC), a web pad, a Wireless Application Protocol (WAP) phone, a palm PC, an e-Book terminal, a Hand Held Terminal (HHT), etc.

The modeling server 20 acquires the images of the object from the connected user terminal 10, selects an appropriate image according to the type or resolution of the user terminal 10 from the acquired images, and three-dimensionally models the image of the object according to an event when the event is input by the user. In this case, the modeling server 20 selects an image, corresponding to a size set by the user, from the images of the object whose sizes are set to one or more types of sizes, disposes the selected image, and three-dimensionally models the image of the object according to the type of event when the event is input by the user.

In order to implement the above-described operations, the modeling server 20 includes a communication unit 210, an image acquisition unit 220, a type determination unit 230, an information setting unit 240, an event determination unit 250, a 3D object modeling unit 260, a memory unit 270, and a control unit 280, as shown in FIG. 2.

The communication unit 210 is a device that transmits and receives data to and from the user terminal 10. The communication unit 210 connects with the user terminal 10 over a wired/wireless communication network, and transmits and receives terminal information, the image information of the object, the size information of the images, control command information, etc. together with basic user information for connection with the modeling server 20. The communication unit 210 establishes a predetermined communication channel with the user terminal 10 based on a protocol stack (for example, the TCP/IP protocol, or the CDMA protocol) defined on the communication network, and transmits and receives information for the present 3D object image modeling using a communication protocol (for example, the Hyper-Text Transfer Protocol (HTTP), the Wireless Application Protocol (WAP) or the Mobile Explorer (ME)) defined in a communication program provided in the user terminal 10. However, in the present invention, the type of network is not limited, but various wired/wireless communication methods, such as wireless LAN (Wi-Fi), Bluetooth, Ultra Wideband (UWB), ZigBee, Near Field Communication (NFC), Wi-Fi Direct (WFD), Infrared Data Association (IrDA), 3G, 4G, 5G, LTE, LTE-A methods and the equivalent methods thereof may be applied to the communication unit 210.

The image acquisition unit 220 may acquire a 3D image of an object, requiring object modeling, from the user terminal 10. In this case, the image acquired from the user terminal 10 may be a 3D image.

The type determination unit 230 may determine the type of user terminal 10 connected over the communication unit 210, and also may determine the resolution that is supported by the user terminal 10. That is, the type determination unit 230 determines the type of user terminal 10 based on terminal information including the type and resolution information of the user terminal 10 received from the user terminal 10, and transmits the results of the determination to the information setting unit 240.

The information setting unit 240 selects an image of the object corresponding to the type and resolution of the user terminal 10 according to the results of the determination of the type determination unit 230. That is, the information setting unit 240 selects an object image of one of the second reference sizes corresponding to the type and resolution of the user terminal 10 from the images of the object whose sizes are set to one or more types of sizes (i.e., the first reference sizes) and which are stored in the memory unit 270 by the user terminal 10. In this case, the information setting unit 240 may select a first image from the images of the object of the second reference sizes, and then may dispose the selected image. Meanwhile, although the first reference sizes may include a small image size S, a medium image size M, and a big image size B and the second reference size may include the small and medium image sizes S and M of the first reference sizes, the types of first and second reference sizes are not limited in the present invention.

The event determination unit 250 determines the type of event, manipulated by the user, via the user terminal 10. That is, the event determination unit 250 determines the operation of enlarging, reducing, rotating or moving the object image that is performed by the user via touch input, mouse input, scroll input, or the like, and transmits the results of the determination to the 3D object modeling unit 260.

The 3D object modeling unit 260 three-dimensionally models the image of the object according to the results of the determination of the event determination unit 250. That is, when the event corresponds to enlargement or reduction, the 3D object modeling unit 260 calculates the size of an image of the object required due to the enlargement or reduction, selects an image of one of the second reference sizes when the calculated size of the image of the object is smaller than the second reference sizes, and three-dimensionally models the corresponding image. In this case, when the calculated size of the image of the object is larger than the second reference sizes, an image of the biggest of the first reference sizes may be selected. Furthermore, the 3D object modeling unit 260 may rotate the disposed image of the object when the event corresponds to rotation or move the disposed image of the object by changing only the location thereof when the event corresponds to movement, and then may three-dimensionally model the corresponding image.

The memory unit 270 is a device that stores user information, the information of the user terminal 10, the image information of the object, the size information of the image, etc. which is input from the user terminal 10 for the purpose of connecting with the modeling server 20. The memory unit 270 may include web storage that performs a storage function over the Internet, or at least one of flash memory, a hard disk, multimedia card micro-type memory, card type-memory (for example, SD or XD memory and the like), Random Access Memory (RAM), Static Random Access Memory (SRAM), Read-Only Memory (ROM), Electrically Erasable Programmable Read-Only Memory (EEPROM), Programmable Read-Only Memory (PROM), magnetic memory, a magnetic disk, and an optical disk.

The control unit 280 may include a drive program for the present 3D object image modeling, and may control the operations of the respective components of the modeling server 20 through the execution of the corresponding drive program. In particular, the control unit 280 may fetch and dispose all images of the second reference sizes, set by the user, from the memory unit 270 when the event is not input by the user terminal 10.

A 3D object modeling method will be described in greater detail below using the 3D object modeling system that is configured as described above.

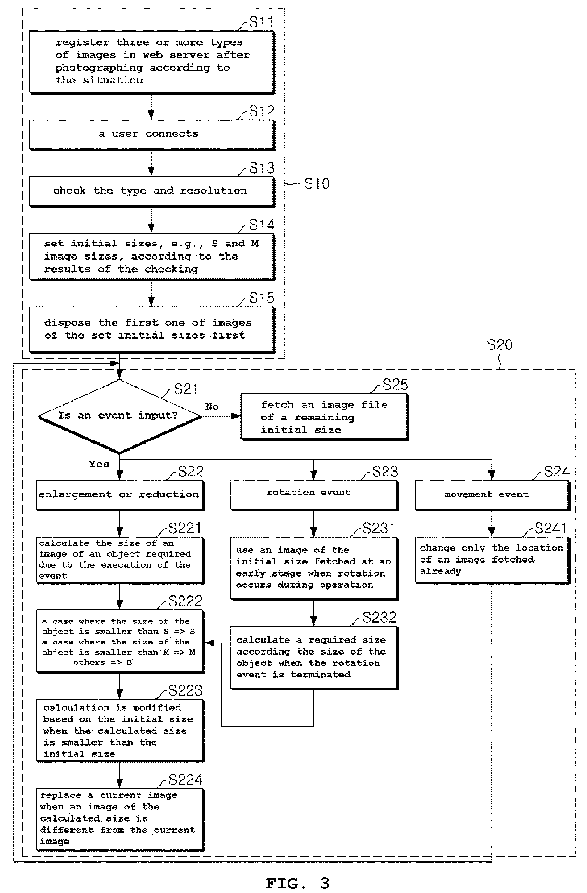

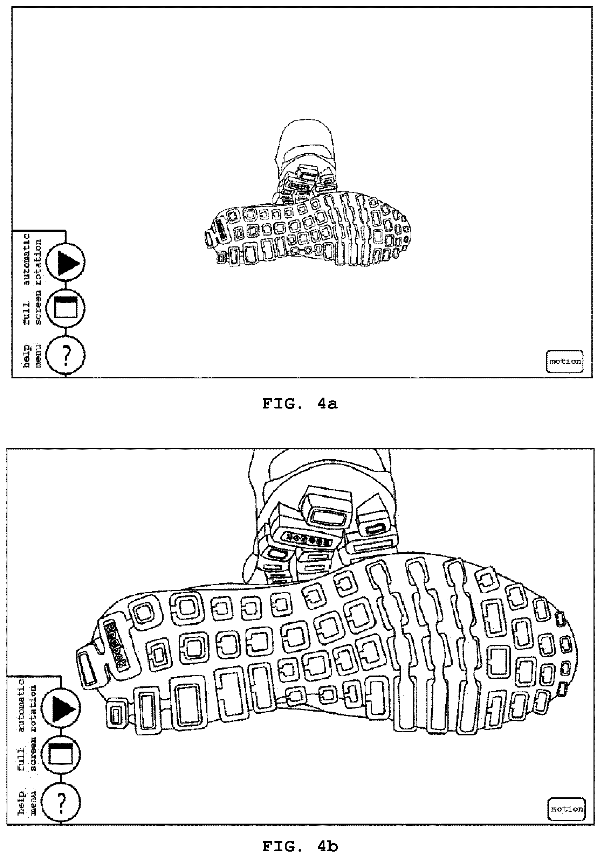

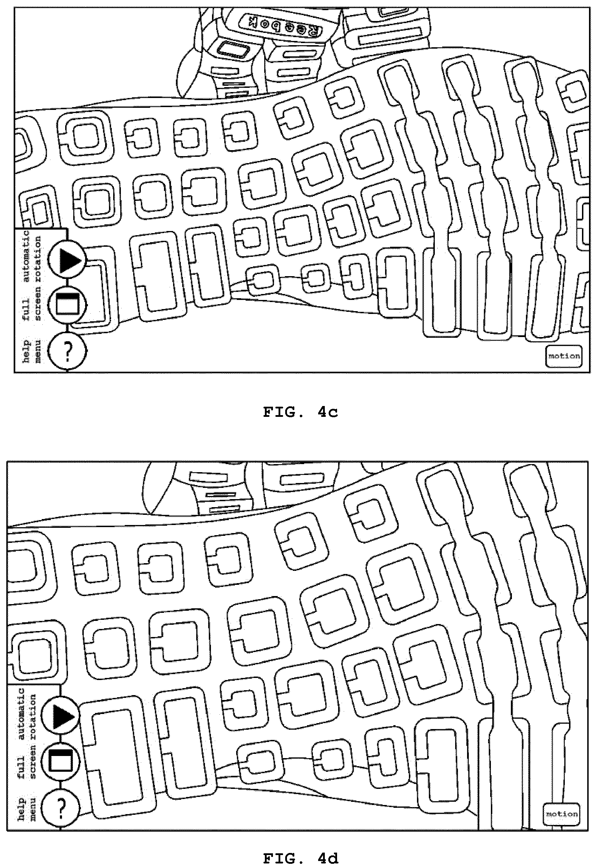

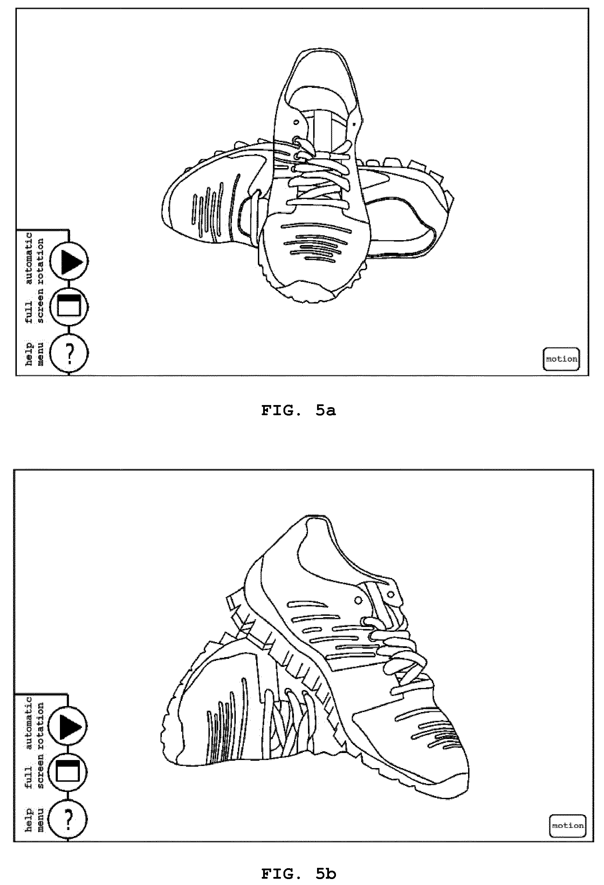

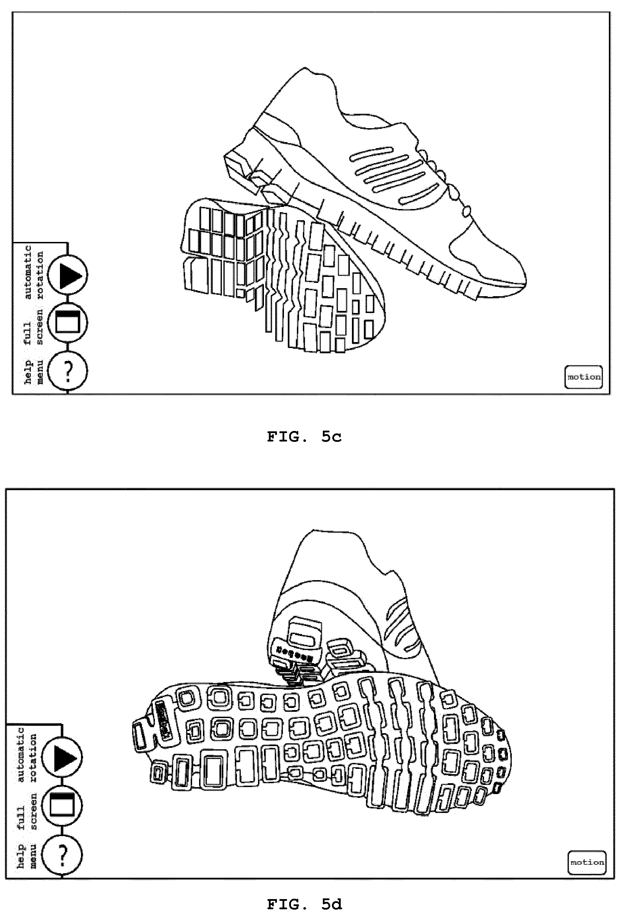

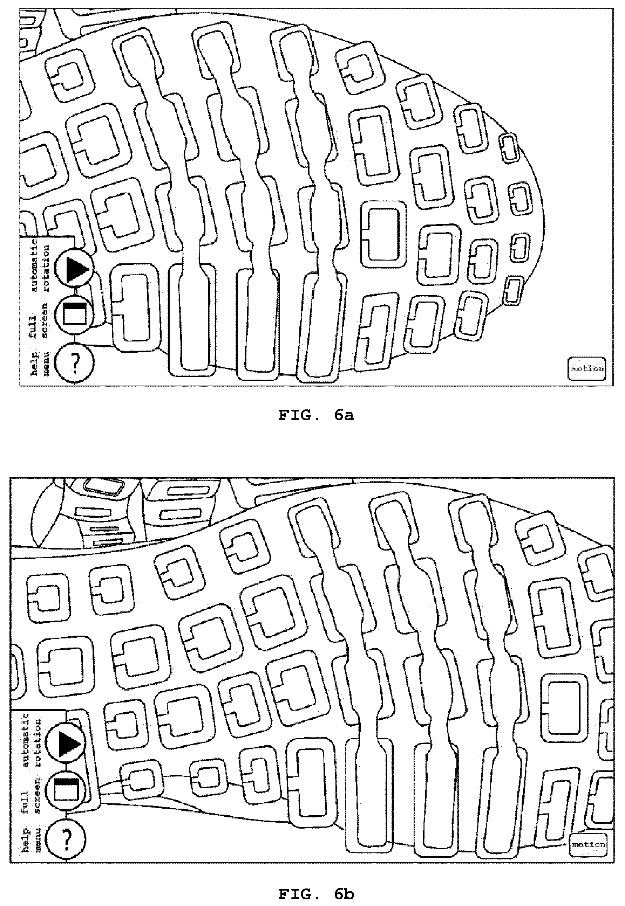

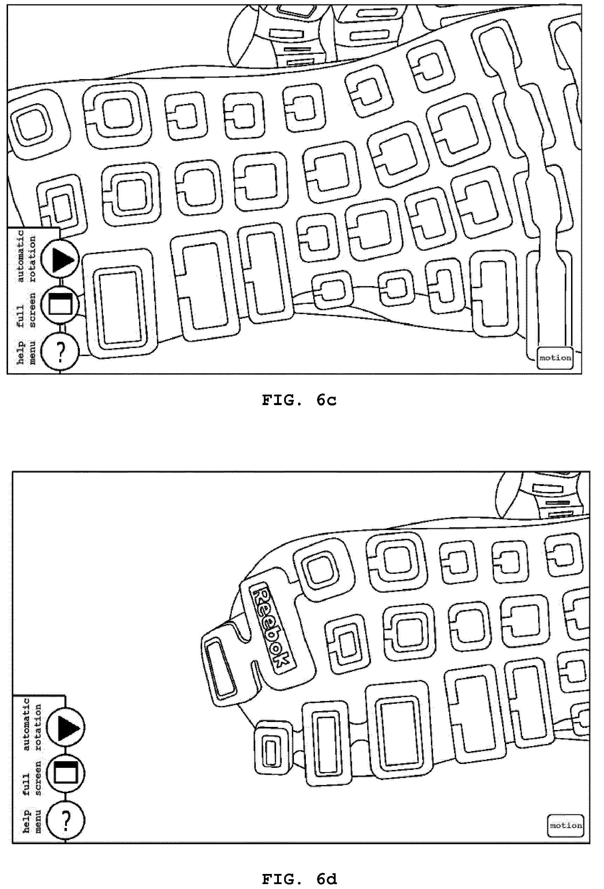

FIG. 3 is a flowchart showing a 3D object modeling method according to an embodiment of the present invention, and FIGS. 4A to 4D are diagrams showing an event of enlarging an object using the 3D object modeling method of FIG. 3, FIGS. 5A to 5D are diagrams showing an event of rotating an object using the 3D object modeling method of FIG. 3, and FIGS. 6A to 6D are diagrams showing an event of moving an object using the 3D object modeling method of FIG. 3.

Referring to FIG. 3, the 3D object modeling method according to the present embodiment basically includes first step S10 of selecting and disposing an image of an object, corresponding to the type of user terminal 10, from images of the object, whose sizes are set to one or more types of sizes, via the user terminal 10, and second step S20 of three-dimensionally modeling the image of the object according to the type of event when an event is input by a user.

More specifically, first step S10 includes first process S11 of photographing an image of an object using a photographing means (i.e., the camera device 1), setting the photographed image to one or more types of first reference sizes, and registering the images in the modeling server 20, process S12 of connecting, by the user, with the modeling server 20, second process S13 of selecting the type and resolution of the user terminal 10, third process S14 of setting the second reference sizes of the image that the user desires to three-dimensionally model from the first reference sizes set at the first process S11 according to the type and resolution of the user terminal 10 selected in the second process S13, and fourth process S15 of selecting and disposing an image corresponding to one of the second reference sizes set in the third process S14.

In this case, in the first process S11, the user may set the sizes of the image of the object, photographed by the camera device, to three types (for example, a small image size S, a medium image size M, and a big image size B), and may register the images in the modeling server 20.

Furthermore, in third process S14, the two types of sizes of the image of the object (for example, the small image size S and the medium image size M), corresponding to the type and resolution of the user terminal 10, may be selected from the three types of sizes of the image of the object set in the first process.

Furthermore, in the fourth process S15, a first image is selected from the second reference sizes of the image set in the third process S14, and is then disposed first.

When an event is input by the user at step S21, second step S20 may include first-first process S221 of calculating the size of an image of the object required due to enlargement or reduction when the corresponding event corresponds to the enlargement or reduction at step S22, and second-first process S222 of selecting an image of one of the second reference sizes when the size of the image of the object calculated in first-first process S221 is smaller than the second reference sizes. In this case, second-first process S222 may select an image of the biggest of the first reference sizes when the size of the image of the object calculated in first process S11 is larger than the second reference sizes. For example, in second-first process S222, calculation is modified and selection is performed based on the small image size S when the calculated object size is smaller than the small image size S, calculation is modified and selection is performed based on the medium image size M when the calculated size of the image of the object is larger than the small image size S and smaller than the medium image size M, and calculation is modified and selection is performed based on the big image size B set by the user when the calculated size of the image of the object is larger than the medium image size M. Furthermore, at second step S20, the image may be replaced with an original image of the object at step S224 when the image of the object of the calculated size is different from a current object image.

That is, when the event corresponds to enlargement or reduction, the size of an image of the object required due to the execution of the event is calculated, and then an image may be fetched only when an object image required due to the enlargement or reduction has not been fetched yet, or an object image fetched at an early stage may be use when an object image required due to the enlargement or reduction is smaller than the fetched image.

Accordingly, when the event corresponds to enlargement, the image of the object three-dimensionally modeled at second step S20 may be shown, as shown in FIGS. 4A to FIG. 4D.

Furthermore, at second step S20, when an event is input by the user, the image of the object selected and disposed in fourth process S15 is rotated when the corresponding event corresponds to rotation at step S23. That is, when the event corresponds to rotation, there is no newly generated traffic regardless of the rotation. Accordingly, an object image of a size fetched at an early stage is used, and then the rotation event is terminated when the manipulation of the user is released. In the case of the rotation event, detailed view is not required during the rotation of the object image. Accordingly, an image of a small resolution loaded at an early stage is used without a need to use a high-resolution image at step S231, the size of a current object image is determined at step S232 when the rotation is terminated, and a high-resolution image is fetched when it is required.

Accordingly, when the event corresponds to rotation, the image of the object three-dimensionally modeled at second step S20 may be shown, as shown in FIGS. 5A to FIG. 5D.

Furthermore, at second step S20, when an event is input by the user, the image of the object selected and disposed in fourth process S15 is moved by changing only the location thereof at step S241 when the corresponding event corresponds to movement at step S24. This movement event is terminated when the image of the object is moved to a location calculated based on the event and then the manipulation of the user is released. Accordingly, when the event corresponds to movement, the image of the object three-dimensionally modeled at second step S20 may be shown, as shown in FIGS. 6A to 6D.

Meanwhile, a 3D object modeling method according to at least one embodiment of the present invention may be implemented as a computer program. The codes and code segments that constitute the computer program can be easily derived by computer programmers having ordinary knowledge in the art. Furthermore, the corresponding computer program may be stored in a computer-readable information storage medium, and may implement the 3D object modeling method in such a way as to be read and executed by a computer, or a modeling server 20 or management server according to at least one embodiment of the present invention. The information storage medium includes a magnetic storage medium, an optical storage medium, and a carrier wave medium. The computer program that implements the 3D object modeling method according to the embodiment of the present invention may be stored and installed in the user terminal 10 or the internal memory of the modeling server 20. Alternatively, external memory, such as a smart card (for example, a subscriber identification module) or the like, in which the computer program that implements the 3D object modeling method according to the embodiment of the present invention has been stored and installed, may be mounted in the user terminal 10 or modeling server 20 via an interface.

A 3D object modeling method and a storage medium having a computer program stored thereon according to some embodiments of the present invention, which are configured as described above, disposes an image of an object of an appropriate size according to the type of user terminal 10 during the processing of 3D data, and automatically selects an appropriate image of the object based on the size of the image of the object according to an event, such as enlargement, reduction or movement, and thus the computational load of the user terminal 10 can be reduced and the generation of corresponding traffic can be suppressed, thereby efficiently modeling a 3D object.

The above-described embodiments are merely some examples of the 3D object modeling method and the storage medium having a computer program stored thereon according to the present invention. The present invention is not limited to these embodiments. It will be apparent to those having ordinary knowledge in the technical field to which the present invention pertains that various modifications and alterations can be made without departing from the gist and technical spirit of the present invention, as defined in the attached claims.

## Claims

1. A three-dimensional (3D) object modeling method for three-dimensionally modeling an image of an object via a user terminal connected with a modeling server, the method comprising:
a first step of selecting an image of an object corresponding to a type of user terminal from images of the object whose sizes are set to one or more types of sizes, and then disposing the selected image of the object, via the user terminal; and
a second step of three-dimensionally modeling the image of the object according to a type of event that is input by a user;
wherein the first step comprises:
a first process of photographing the image of the object using a photographing means, setting sizes of the photographed image to first reference sizes, and registering the images in a modeling server;
a second process of connecting, by the user, with the modeling server, and selecting a type and resolution of the user terminal;
a third process of setting sizes of the set first reference sizes as second reference sizes for the image that the user desires to three-dimensionally model according to the selected type and resolution of the user terminal; and
a fourth process of selecting and disposing an image corresponding to one of the set second reference sizes;
wherein the fourth process comprises first selecting a first image of the images whose sizes are set to the second reference sizes in the third process, and then disposing the selected first image; and
wherein the fourth process further comprises, when the event is not input by the user, selecting a remaining image, other than the first image, from the images whose sizes are set to the second reference sizes in the third process, and then disposing the selected image.

2. The 3D object modeling method of claim 1, wherein the second step comprises:
a first process of, when the event corresponds to enlargement or reduction, calculating a size of an image of the object required due to the enlargement or reduction; and
a second process of, when the calculated size of the image of the object is smaller than the second reference sizes, selecting an image of one of the second reference sizes.

3. The 3D object modeling method of claim 2, wherein the second process comprises, when the calculated size of the image of the object is larger than the second reference sizes, selecting an image of a biggest one of the first reference sizes.

4. The 3D object modeling method of claim 1, wherein the second step comprises:
a process of, when the event corresponds to rotation, rotating the image of the object selected and disposed in the fourth process; and
a process of, when the event corresponds to movement, moving the image of the object, selected and disposed in the fourth process, by changing only a location of the image of the object.

5. The 3D object modeling method of claim 1, wherein:
the first reference sizes comprise a first image size, a second image size bigger than the first image size, and a third image size bigger than the second image size; and
the second reference sizes comprise the first and second image sizes of the first reference sizes.

6. The 3D object modeling method of claim 1, wherein the event comprises any one of enlargement, reduction, rotation and movement events that are generated by at least one of touch, mouse and scroll inputs of the user on a display of the user terminal.

7. A computer-readable storage medium having stored thereon a computer program, comprising codes configured to perform the 3D object modeling method set forth in any one of claims 1 to 6.
